# EUROPÄISCHE PATENTSCHRIFT

(11) **EP 0 492 006 B1**
(45) Veröffentlichungstag und Bekanntmachung des Hinweises auf die Patenterteilung: **20.04.1994**
(21) Anmeldenummer: 90250338.2
(22) Anmeldetag: 22.12.1990
(51) Int. Cl.: B60J 7/185, E05B 65/12, E05C 9/18

(54) **Vorrichtung zum Niederholen des freien Endes eines Fahrzeugverdecks oder dergleichen**
Lowering device of the free edge of vehicle soft top or similar
Dispositif d'abaissement du bord libre d'une capote de véhicule ou similaire

(43) Veröffentlichungstag der Anmeldung: 01.07.1992
(73) Patentinhaber: DESIGN + TECHNIK GMBH, 22609 Hamburg (DE)
(72) Erfinder: Hahn, Christian, W-2000 Hamburg 52 (DE); Lundgren, Edwin, W-2407 Bad Schwartau (DE)
(74) Vertreter: UEXKÜLL & STOLBERG

(56) Entgegenhaltungen:
- DE-C- 190 762
- US-A- 3 831 580
- US-A- 4 830 425

## Beschreibung

Die Erfindung bezieht sich auf eine Vorrichtung zum Niederholen des freien Endes eines Fahrzeugverdecks, einer Haube oder dergleichen auf den Rahmen eines Fahrzeugs aus einer Stellung, in der sich das Fahrzeugverdeck oder dergleichen kurz vor der geschlossenen Stellung und das freie Ende oberhalb dieser befindet, und zum Halten des vorderen Endes des Fahrzeugverdecks oder dergleichen in der niedergeholten Stellung, mit mindestens einem am freien Ende des Fahrzeugverdecks oder dergleichen vorgesehenen Eingriffselement für den Eingriff eines am Rahmen vorgesehenen Niederholhakens, der eine Angriffskurve zum gleitenden Eingriff mit dem Eingriffselement aufweist und der mit der Betätigungsstange einer Antriebseinrichtung über einen in Eingriff mit einem länglichen Aufnahmeschlitz stehenden Schwenkzapfen schwenkbar gekoppelt und von der Antriebseinrichtung zwischen einer angehobenen Eingriffsstellung und einer abgesenkten Verriegelungsstellung bewegbar ist.

Bei einer bekannten Vorrichtung dieser Art (DE-C-3 923 695) weist der jeweilige Niederholhaken an seiner der Betätigungsstange zugewandten Seite einen Eingriffsbereich, etwa in Form einer Aussparung auf, und in der Verriegelungsstellung steht eine schwenkbare Riegelklinke in verriegelndem Eingriff mit diesem Eingriffsbereich des Niederholhakens und hält so den Niederholhaken in der Verriegelungsstellung. Um die Riegelklinke außer Eingriff mit dem Niederholhaken zu bringen und ein Öffnen des Fahrzeugverdecks, der Haube oder dergleichen zu ermöglichen, läßt sich die Betätigungsstange von der Antriebseinrichtung so bewegen, daß zunächst der Schwenkzapfen in dem in der Verriegelungsklinke ausgebildeten länglichen Aufnahmeschlitz verlagert wird, ohne daß es zu einer Änderung der Stellung des Niederholhakens kommt. Bei dieser Verlagerungsbewegung des Schwenkzapfens im Aufnahmeschlitz greift ein an der Betätigungsstange vorgesehenes Element an der Riegelklinke an und schwenkt diese außer Eingriff mit dem Niederholhaken. Danach wird der Niederholhaken durch die sich fortsetzende Bewegung der Betätigungsstange vom Schwenkzapfen in die angehobene Eingriffstellung verschwenkt.

Entsprechend wird zur Bewegung des Niederholhakens von der angehobenen Eingriffsstellung in die abgesenkte Verriegelungsstellung der Schwenkzapfen durch die entsprechende Bewegung der Betätigungsstange in Eingriff mit dem dem Eingriffselement näheren Ende des Aufnahmeschlitzes gebracht und dadurch der Niederholhaken verschwenkt, wobei sich ein an der Betätigungsstange vorgesehenes Hilfselement der Riegelklinke nähert und diese kurz vor Erreichen der Verriegelungsstellung mitnimmt, um sie so bei Erreichen der Verriegelungsstellung in Eingriff mit dem Niederholhaken zu drücken.

Mit der bekannten Vorrichtung ist bei verhältnismäßig geringer Bauhöhe ist ein zuverlässiges Niederholen und Arretieren des Fahrzeugverdecks, der Haube oder dergleichen auf dem Rahmen des Fahrzeugs möglich. Die bekannte Vorrichtung erfordert jedoch eine verhältnismäßig große Genauigkeit im Aufbau, damit Niederholhaken, Riegelklinke, Schwenkzapfen sowie die an der Betätigungsstange vorgesehenen Elemente zur Bewegung der Riegelklinke in der gewünschten Weise zusammenarbeiten.

Es ist Aufgabe der Erfindung, eine Vorrichtung zum Niederholen des freien Endes eines Fahrzeugverdecks oder dergleichen zu schaffen, die bei niedriger Bauhöhe und zuverlässiger Funktion einen einfachen Aufbau hat.

Zur Lösung dieser Aufgabe wird eine Vorrichtung der eingangs erwähnten Art erfindungsgemäß derart ausgestaltet, daß der Aufnahmeschlitz für den Schwenkzapfen am Rahmen ausgebildet ist, daß der Niederholhaken einen länglichen Führschlitz aufweist, mit dem ein am Rahmen befestigter Führzapfen in Eingriff steht, um den der Niederholhaken bei Bewegung in die Verriegelungsstellung unter Verlagerung des Führzapfens entlang dem Führschlitz schwenkbar ist, und daß der Niederholhaken bei Bewegung in die Verriegelungsstellung vor deren Erreichen eine Zwischenstellung durchläuft, in der das Eingriffselement weiter abgesenkt ist, als in der Verriegelungsstellung, so daß der Niederholhaken in der Verriegelungsstellung selbsthemmend gehalten wird.

Bei der erfindungsgemäßen Vorrichtung ist, abweichend von dem Aufbau der bekannten Vorrichtung, keine Riegelklinke und auch kein andersartiges Verriegelungselement vorhanden, das in genauer Zuordnung zur Bewegung des Niederholhakens bewegt werden müßte, sondern die Verriegelung des Niederholhakens in der Verriegelungsstellung erfolgt durch Selbsthemmung des Verriegelungshakens, was sich durch das Zusammenwirken der Form des Aufnahmeschlitzes, der Form des Führschlitzes und der Ausbildung der Angriffskurve des Niederholhakens erreichen läßt.

In einer Ausgestaltung der Erfindung kann die den Schwenkzapfen in der Verriegelungsstellung stützende Fläche des Aufnahmeschlitzes vom den Schwenkzapfen in der Verriegelungsstellung aufnehmenden Endbereich zur Erzeugung der Zwischenstellung ansteigen und in Fortsetzung davon bis unter die Höhe des Endbereichs abfallen. Der Schwenkzapfen wird daher bei Bewegung des Niederholhakens in Richtung auf die Verriegelungsstellung zunächst entlang des abfallenden Teils der stützenden Fläche des Aufnahmeschlitzes in Richtung auf den Bereich für die Zwischenstellung bewegt und drückt dadurch den Niederholhaken, der in Eingriff mit dem Eingriffselement steht, nach unten, wodurch das Eingriffselement und damit das Fahrzeugverdeck, die Haube oder dergleichen gegen den Rahmen bewegt werden. Bei dieser Absenkbewegung des Niederholhakens durchläuft der Niederholhaken eine Position, die der Verriegelungsstellung entspricht, wird jedoch infolge des weiteren Anstiegs der Fläche des Aufnahmeschlitzes bis in den Bereich für die Zwischenstellung noch weiter abgesenkt, wodurch das Fahrzeugverdeck, die Haube oder dergleichen unter Zusammendrückung der vorhandenen Dichtung oder andere elastische Verformungen über die Verriegelungsstellung des Niederholhakens hinaus gegen den Rahmen abgesenkt wird. Erst wenn der die Zwischenstellung erzeugende Bereich der stützenden Fläche des Aufnahmeschlitzes überlaufen ist, gelangt der Schwenkzapfen in den die Verriegelungsstellung festlegenden Endbereich des Aufnahmeschlitzes, wobei sich der Niederholhaken wieder etwas anhebt und die zuvor stark zusammengedrückte Dichtung o.ä. etwas entspannt wird. Aus dieser Stellung kann der Niederholhaken nur durch Verlagerung des Schwenkzapfens über den die Zwischenstellung bildenden Abschnitt der stützenden Fläche des Aufnahmeschlitzes bewegt werden, wozu eine Kraft erforderlich ist, die die vorstehend erwähnte, zusätzliche Absenkbewegung des Eingriffselementes bewirkt. Eine derartige Kraft kann im Normalbetrieb nicht auftreten, so daß der Niederholhaken in der Verriegelungsstellung selbsthemmend gehalten wird und sich nur durch Aufbringung einer entsprechenden Kraft mittels der Betätigungsstange aus dieser Verriegelungsstellung lösen läßt.

Der an den abfallenden Abschnitt der Fläche des Aufnahmeschlitzes anschließende Endabschnitt verläuft vorzugsweise waagerecht, so daß sich der Niederholhaken von der Verriegelungsstellung über die Eingriffsstellung sehr einfach in eine im wesentlichen senkrechte Lage verschwenken läßt.

Eine zuverlässige und sichere Führung des Schwenkzapfens im Aufnahmeschlitz ergibt sich dann, wenn der Aufnahmeschlitz über seine gesamte Länge im wesentlichen konstante Breite hat.

Bei einem derartigen, die Selbsthemmung bewirkenden Aufbau des Aufnahmeschlitzes kann der Führschlitz, der im Niederholhaken vorgesehen ist und mit dem der am Rahmen befestigte Führzapfen in Eingriff steht, geradlinig ausgebildet sein.

In einer anderen Ausgestaltung der Erfindung steigt die den Führzapfen in der Verriegelungsstellung stützende Fläche des Führschlitzes vom den Führzapfen in der Verriegelungsstellung aufnehmenden Endbereich zur Erzeugung der Zwischenstellung an und fällt in ihrer Fortsetzung davon bis unter die Höhe des Endbereichs ab.

Bei dieser Ausgestaltung wird somit die Verlagerungsbewegung des Niederholhakens von der Eingriffsstellung in die Verriegelungsstellung unter Durchlaufen einer Zwischenstellung, die tiefer liegt als die Verriegelungsstellung, durch die Form des Führschlitzes erreicht, und auch bei dieser Ausbildung befindet sich der Niederholhaken in der Verriegelungsstellung in einer selbsthemmenden Lage, da sich der Führzapfen nur durch Aufbringen einer Kraft mittels der Betätigungsstange unter weiterer Absenkung des Niederholhakens über die Verriegelungsstellung hinaus nach unten aus dieser Verriegelungsstellung bewegen läßt.

Bei dieser Ausbildung schließt an den abfallenden Abschnitt der Fläche des Aufnahmeschlitzes vorzugsweise ein im wesentlichen geradliniger Endabschnitt an.

Der Aufnahmeschlitz hat zur zuverlässigen und gleichmäßigen Führung des Führzapfens vorzugsweise über seine gesamte Länge eine im wesentlichen konstante Breite.

Bei der Ausbildung des Führschlitzes gemäß zweiter Ausführungsform ist der Aufnahmeschlitz vorzugsweise geradlinig. Er kann darüber hinaus waagerecht verlaufen.

Die Erfindung wird im folgenden anhand der schematisch Ausführungsbeispiele zeigenden Figuren näher erläutert.
- Figur 1: zeigt in einer schematischen Teilansicht und teilweise im Schnitt das vordere Ende eines mittels einer erfindungsgemäßen Vorrichtung niedergeholten Fahrzeugverdecks, das auf dem einen Teil des Fahrzeugrahmens bildenden Windlauf aufliegt.
- Figur 2: zeigt die Vorrichtung aus Figur 1 in einer vereinfachten Ansicht von unten.
- Figur 3: zeigt in einer Darstellung entsprechend Figur 1 die Anordnung vor dem Eingriff der Niederholhaken der erfindungsgemäßen Vorrichtung mit den Eingriffselementen des niederzuholenden Fahrzeugverdecks.
- Figur 4: zeigt in einer Darstellung entsprechend Figur 2 den Betriebszustand gemäß Figur 3.
- Figur 5: zeigt in einer perspektivischen Teildarstellung ein Verschlußteil mit in der Verriegelungsstellung befindlichem Niederholhaken und an diesem angreifendem Ende einer Betätigungsstange gemäß Figuren 1 bis 4.
- Figuren 6 bis 12: zeigen in schematischer Darstellung verschiedene Stellungen des Niederholhakens und des Eingriffselementes des Fahrzeugverdecks gemäß Figuren 1 bis 5.
- Figuren 13 bis 18: zeigen Darstellungen entsprechend Figuren 6 bis 12 für eine abgewandelte Niederhol-Vorrichtung.

Obwohl die Erfindung nachstehend in Zusammenhang mit einem Fahrzeugverdeck beschrieben wird, läßt sie sich auch zum Niederholen einer Haube oder dergleichen, etwa einer Kofferraumhaube oder einer Motorhaube einsetzen.

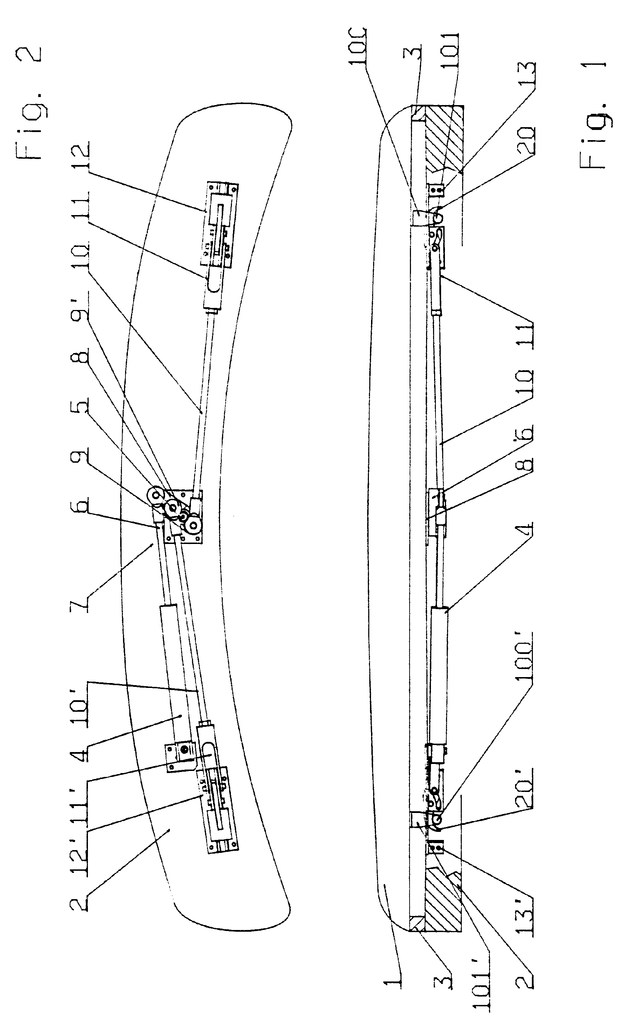

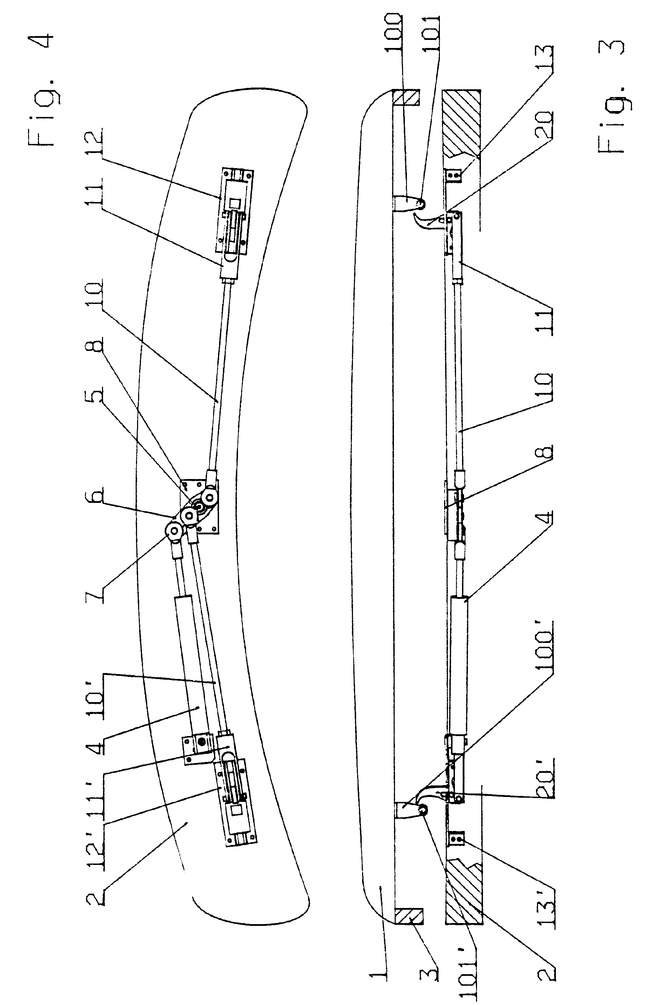

In den Figuren 1 bis 4 ist schematisch der oberhalb der Frontscheibe eines Kraftfahrzeugs liegende Windlauf 2 dargestellt, der einen Teil des Fahrzeugrahmens bildet. Oberhalb dieses Windlaufs ist in den Figuren 1 und 3 das vordere Ende eines Fahrzeugverdecks 1 gezeigt, das in nicht dargestellter Weise entweder von Hand oder mittels eines Antriebs aus der Stellung gemäß Figur 3 in eine vollständig zurückgeklappte Stellung und aus dieser in die Stellung gemäß Figur 3 bewegt werden kann. Das Fahrzeugverdeck 1 liegt mit einer an seinem rahmenförmigen Rand vorgesehenen elastischen Dichtung in der verriegelten Stellung gemäß Figur 1 auf dem seitlichen Randbereich des Windlaufes 2 auf.

Die Vorrichtung zum Niederholen und Festhalten des vorderen Endes des Fahrzeugverdecks 1 enthält einen als Antrieb dienenden hydraulischen Arbeitszylinder 4, der an der Unterseite des Windlaufes 2 befestigt ist und dessen Kolbenstange mit ihrem freien Ende schwenkbar mit einem Zapfen 7 verbunden ist, der auf einem Gelenkkopf 6 sitzt. Dieser Gelenkkopf ist um eine Mittelachse 5 schwenkbar an einer Grundplatte 8 befestigt, die an der Unterseite des Windlaufes 2 befestigt ist und zu deren beiden Seiten parallel zum Zapfen 7 liegende Zapfen 8, 9 vorgesehen sind. Die Zapfen 8 und 9 stehen in Eingriff mit den freien Enden der inneren Abschnitte 10 und 10' von Betätigungsstangen 10, 11 und 10', 11', von denen jede zur Betätigung eines Niederholhakens 20, 20' dient, die, wie insbesondere den Figuren 1 und 3 zu entnehmen ist, in Eingriff mit an der Unterseite des Fahrzeugverdecks 1 befestigten Eingriffselementen 101, 101' stehen bzw. in Eingriff mit diesen gebracht werden können. Die Eingriffselemente 101, 101' sind jeweils mittels an ihren beiden Enden angreifenden Halteabschnitten 100, 100' an der Unterseite des Fahrzeugverdecks 1 befestigt.

Wie sich durch Vergleich der Figuren 1 und 2 und der Figuren 3 und 4 ergibt, lassen sich die Niederholhaken 20, 20' aus ihrer in Figur 3 gezeigten Stellung, in der sie im wesentlichen nach oben gerichtet sind und außer Eingriff mit den Eingriffselementen 101, 101' am Fahrzeugverdeck 1 stehen, durch Betätigung des Arbeitszylinders 4 in die Verriegelungsstellung gemäß Figur 1 bewegen, indem die Kolbenstange des Arbeitszylinders 4 aus der eingefahrenen Stellung gemäß Figur 4 hydraulisch aus dem Zylinder heraus in die Stellung gemäß Figur 2 gefahren wird. Hierdurch wird der Gelenkkopf 6 um die Mittelachse 5 verschwenkt, wodurch die Betätigungsstangen 10, 11 und 10' und 11' so verfahren werden, daß ihre äußeren freien Enden näher zur Mitte des Windlaufes 2 gelangen, also in die Stellung gemäß Figur 2, in der die Niederholhaken 20, 20' in die Verriegelungsstellung abgesenkt sind.

Es sei erwähnt, daß die Verlagerung der Betätigungsstangen 10, 11 und 10', 11' selbstverständlich auch mittels anderer Antriebe erfolgen kann, etwa durch getrennte Arbeitszylinder, wie dies in der DE-B-3 923 695 gezeigt ist, oder aber auch von Hand, etwa mittels einer Anordnung gemäß EP-A-0 408 951.

Da die dargestellte Vorrichtung zum Niederholen und Festhalten des vorderen Endes des Fahrzeugverdecks 1 zwei gleichartige, jeweils von einer Betätigungsstange 10, 11 und 10', 11' betätigte, gleich aufgebaute Anordnungen aufweist, wurden die einzelnen Elemente in den beiden Anordnungen mit gleichen Bezugszeichen, jedoch in der linken Anordnung gemäß Figuren 1 bis 4 zusätzlich mit "'" gekennzeichnet. Im folgenden wird wegen dieser Gleichartigkeit im Aufbau nur die in den Figuren 1 bis 4 rechte Anordnung beschrieben werden.

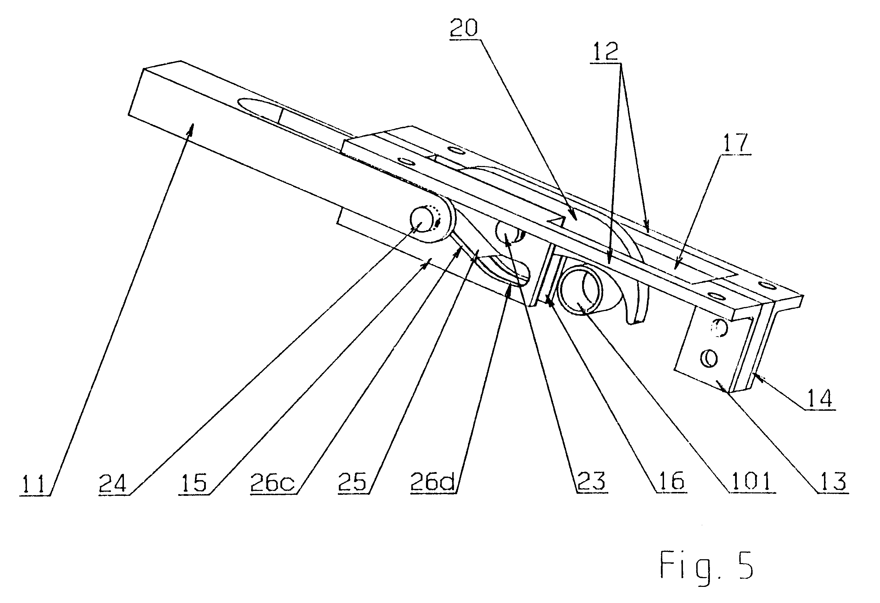

Wie insbesondere in Figur 5 dargestellt, ist zur Halterung des Niederholhakens 20 ein Verschlußteil 12 vorhanden, das aus zwei Teilelementen besteht und mit seiner oberen Fläche mittels Schrauben am Windlauf 2 anliegend befestigt wird. Von diesem am Windlauf befestigten Abschnitten des Verschlußteils 12 erstrecken sich Winkelabschnitte 13, 14, 15 nach unten, zwischen denen nicht bezeichnete Distanzelemente mittels Schrauben befestigt sind. Die beiden Elemente des Verschlußteils 12 bilden zwischen sich eine Durchtrittsöffnung 17, in deren Bereich der Niederholhaken 20 angeordnet ist. Der Niederholhaken 20 weist einen länglichen Führschlitz 22 auf, durch den sich ein Führzapfen 23 erstreckt, der am Verschlußteil 12 und somit am Rahmen befestigt ist. Ferner ist im Niederholhaken 20 schwenkbar ein Schwenkzapfen 24 gehaltert, der sich parallel zum Führzapfen 23 und unterhalb von diesem sowie zu beiden Seiten in Aufnahmeschlitze 25 erstreckt, die in den Abschnitten 15 des Verschlußteils 12 ausgebildet sind und deren Funktion später unter Bezugnahme auf einen der Aufnahmeschlitze erläutert wird. Der Schwenkzapfen 24 ist in den Wandungen des gabelkopfförmigen Abschnittes 11 der Betätigungsstange 10, 11 befestigt. Dieser gabelkopfförmige Abschnitt 11 ist in nicht näher dargestellter Weise über eine Schraubverbindung mit dem Abschnitt 10 der Betätigungsstange verbunden.

Der Niederholhaken 20 hat eine teilweise gekrümmte Angriffskurve 21, die zum Niederholen des Fahrzeugverdecks 2 in Eingriff mit dem Eingriffselement 101 gebracht wird. Dieses Eingriffselement kann aus einem Rohrteil bestehen, es ist jedoch auch möglich, zur Reibungsverringerung einen Zapfen mit auf ihm drehbar angeordneter Buchse vorzusehen. In diesem Zusammenhang sei erwähnt, daß infolge des Gesamtaufbaus des Fahrzeugverdecks das Eingriffselement 101 nur in einer Senkrechten, d.h. entlang der Linie 102 bewegt werden kann, während seitliche Verlagerungen bezüglich der Linie 102 nicht möglich sind.

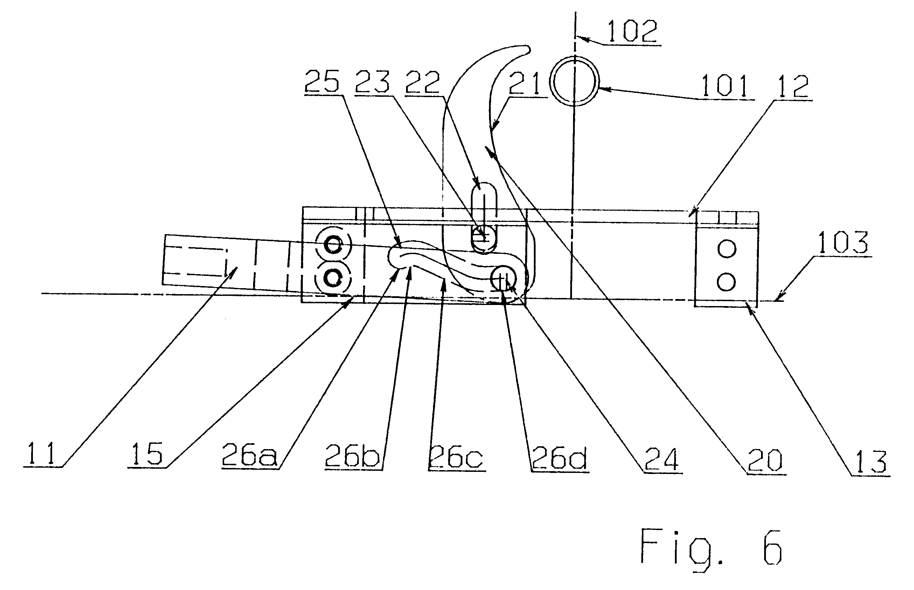

Zur Beschreibung der Funktionsweise der Vorrichtung gemäß Figuren 1 bis 5 wird auf die den Bewegungsablauf beim Niederholen des Fahrzeugverdecks 1 verdeutlichenden Figuren 6 bis 12 Bezug genommen.

In der Ausgangsstellung, in der das Fahrzeugverdeck 1 in nicht dargestellter Weise in eine Stellung kurz vor der geschlossenen Stellung gebracht wurde, so daß das Eingriffselement 101 in dem dargestellten Abstand oberhalb der in den Figuren 6 bis 12 jeweils auf gleicher Höhe gezeigten Bezugslinie 103 liegt, befindet sich der Niederholhaken 20 in einer im wesentlichen senkrecht nach oben gerichteten Eingriffsstellung. In diese Stellung wird er durch die Verfahren der Betätigungsstange 10, 11 in den Figuren nach rechts gebracht, und in dieser Stellung liegt der Schwenkzapfen 24 am äußeren, d.h. in den Figuren rechten Ende des Aufnahmeschlitzes 25 und der Führzapfen 23 am oder nahe dem in der Darstellung gemäß Figur 6 unteren Ende des im Niederholhakens 20 ausgebildeten, in seiner Breite an den Durchmesser des Führzapfens 23 angepaßten Führschlitzes 22.

Der Aufnahmeschlitz 25, dessen Breite so gewählt ist, daß der Schwenkzapfen 24 im wesentlichen von beiden Seitenwänden des Aufnahmeschlitzes geführt gehalten wird, d.h. der Verlauf der Unterkante des Aufnahmeschlitzes 25 entspricht demjenigen seinere Oberkante, ist in etwa in Form eines langgestreckten S gekrümmt. So verläuft der in Figur 6 rechte Abschnitt 26d der unteren Fläche des Aufnahmeschlitzes 25 in etwa horizontal. Nach links schließt an den Abschnitt 26d ein in etwa geradlinig ansteigender Abschnitt 26c an, der an einem den höchsten Punkt des Flächenverlaufs bildenden Zwischenabschnitt 26b endet. Vom Zwischenabschnitt 26b geht dann nach links ein etwas nach unten verlaufender Endabschnitt 26a aus.

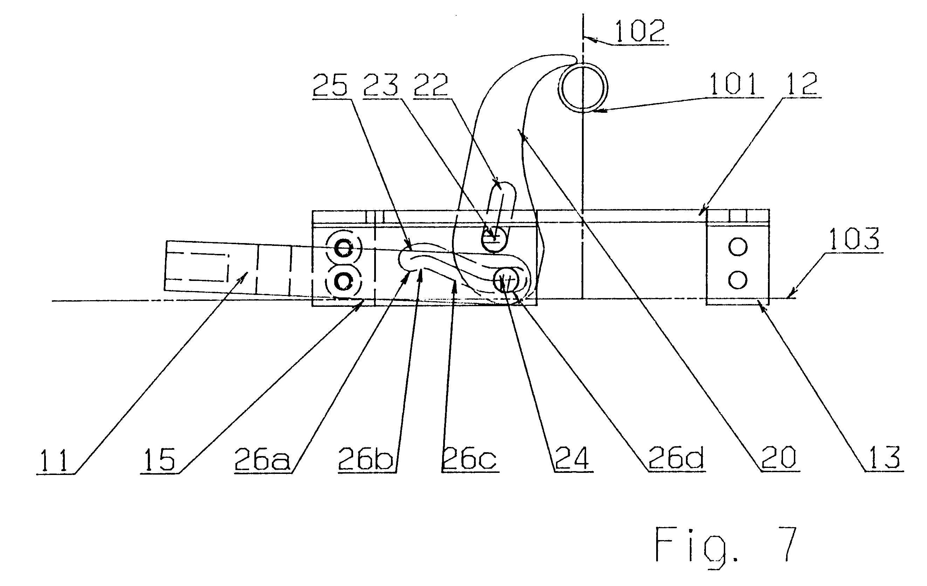

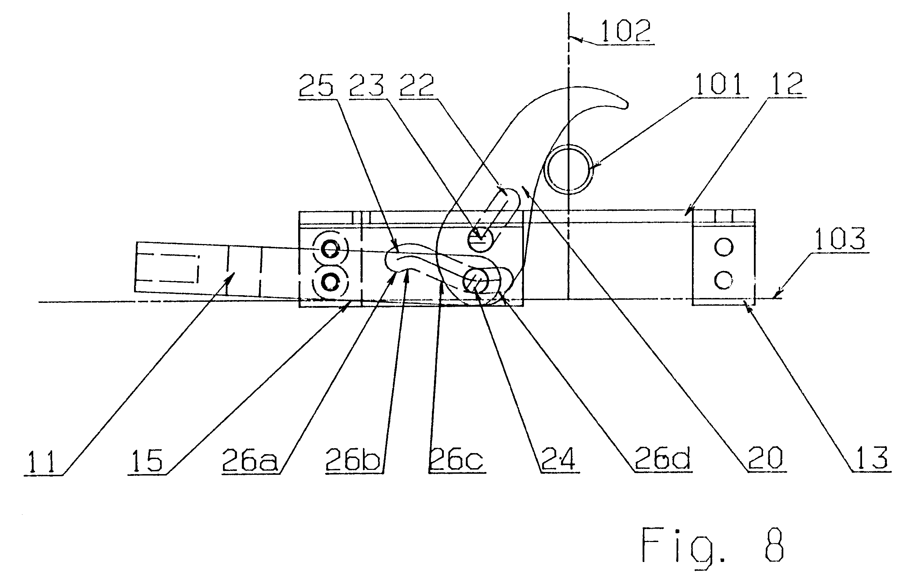

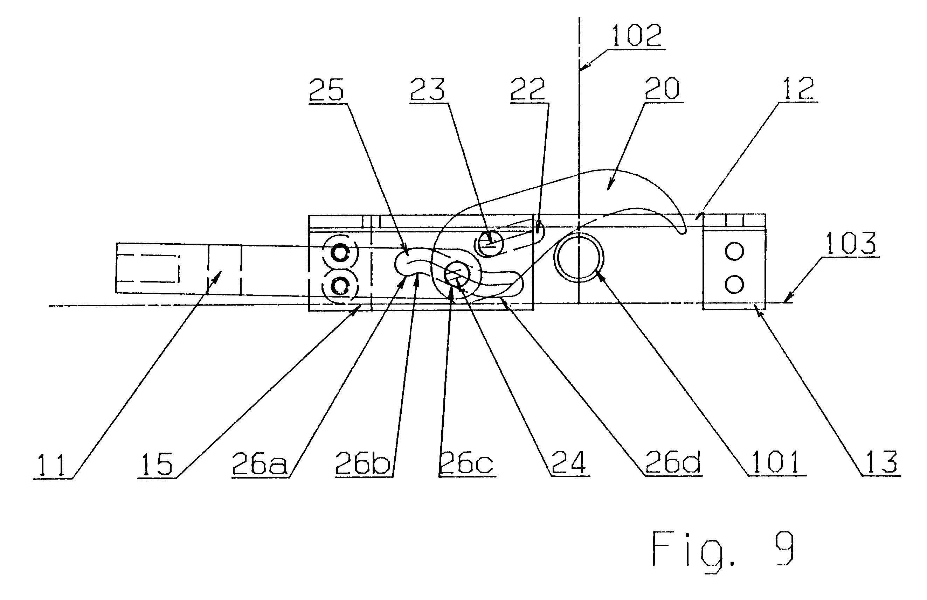

Wird die Betätigungsstange 10, 11 zum Niederholen des Fahrzeugverdecks 1 nach links verlagert, wird dadurch der Schwenkzapfen 24 im Aufnahmeschlitz 25 nach links bewegt, und der Niederholhaken 20 führt eine Schwenkbewegung aus, die um den Führzapfen 23 und unter Verlagerung des Führzapfens 23 bezüglich der Längserstreckung des Führschlitzes 22 stattfindet. Dabei bewegt sich zunächst der Schwenkzapfen 24 entlang dem horizontalen Abschnitt 26d im Aufnahmeschlitz 25, und der Niederholhaken 20 wird in Eingriff mit dem Eingriffselement 101 des Fahrzeugverdecks 1 gebracht (Figur 7). Die weitere Bewegung der Betätigungsstange 10, 11 läßt den Schwenkzapfen 24 entlang dem geradlinig ansteigenden Abschnitt 26c des Aufnahmeschlitzes 25 wandern und bewirkt das Absenken des Eingriffselementes 101 entlang der Linie 102 infolge Schwenkbewegung des in Eingriff mit dem Eingriffselement 101 stehenden Niederholhakens 20 (Figuren 8 und 9). Bei dieser Absenkbewegung nähert sich, wie zu erkennen ist, das Eingriffselement 101 immer mehr der Bezugslinie 103 an.

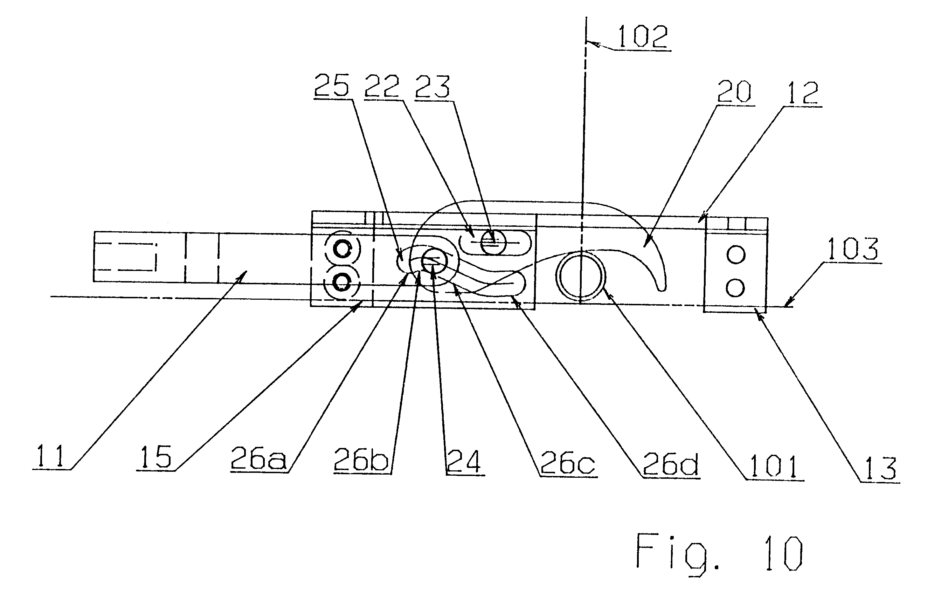

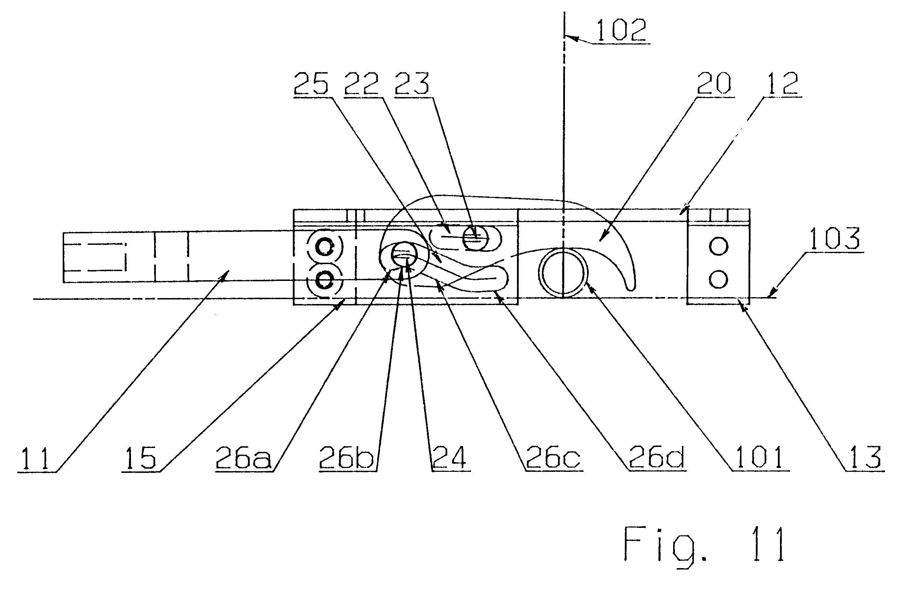

In etwa beginnend mit der Anstiegsbewegung des Schwenkzapfens 24 entlang dem Abschnitt 26c des Aufnahmeschlitzes 25 ergibt sich auch eine Verlagerungsbewegung des Führzapfens 23 entlang dem Führschlitz 22 in Richtung auf das in Figur 9 rechte Ende des Führschlitzes 22. Kurz bevor der Schwenkzapfen 24 den den höchsten Punkt der unteren Fläche des Aufnahmeschlitzes 25 bildenden Zwischenabschnitt 26b erreicht hat, ist das Eingriffselement 101 in eine Lage abgesenkt (Figur 10), die derjenigen entspricht, die es auch in der Verriegelungsstellung einnimmt. Aus dieser Stellung wird das Eingriffselement 101 durch Bewegung des Schwenkzapfens 24 auf den Zwischenbereich 26b des Aufnahmeschlitzes 25 noch weiter entlang der Linie 102 nach unten in eine Stellung bewegt (Figur 11), in der sich der Schwenkzapfen 24 auf dem Zwischenbereich 26b befindet. Diese zusätzliche Absenkung, die durch Vergleich des Abstandes des Eingriffselementes 101 von der Bezugslinie 103 in den Figuren 10 und 11 deutlich wird, bewirkt ein zusätzliches Zusammendrücken der elastischen Dichtung 3 (Figuren 1 und 3), die in Eingriff mit dem Rand des Windlaufs 2 kommt.

Die weitere Bewegung der Betätigungsstange 10, 11 nach links verlagert dann den Schwenkzapfen 24 über den Zwischenbereich 26b des Aufnahmeschlitzes 25 hinaus in den etwas tiefer liegenden Endbereich 26a, und infolge der Absenkbewegung des Schwenkzapfens 24 hebt sich der Niederholhaken (20) wieder geringfügig an. Das Eingriffselement 101 des Fahrzeugverdecks 1 befindet sich in der nun erreichten Verriegelungsstellung etwas oberhalb der Bezugslinie 103 und damit wieder in etwa in der Stellung gemäß Figur 10. In dieser Lage hat auch der Führzapfen 23 das rechte Ende des Führschlitzes 22 erreicht. Die Niederholbewegung ist beendet.

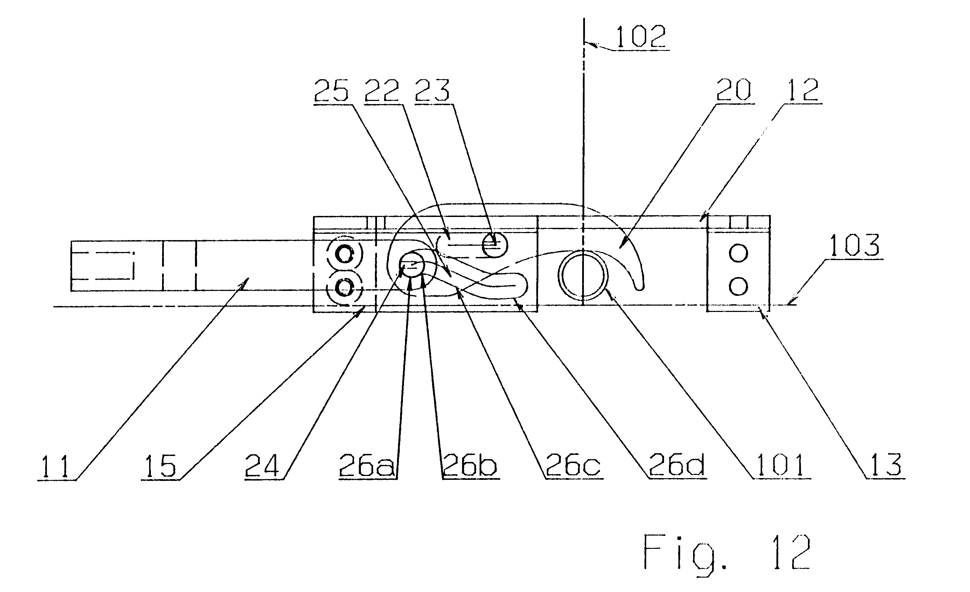

In der Verriegelungsstellung gemäß Figur 12 liegt, wie beschrieben, der Schwenkzapfen 24 im gegenüber dem Zwischenabschnitt 26b des Aufnahmeschlitzes 25 tiefer angeordneten Endabschnitt 26a, während die durch elastische Verformung von Dichtungen 3 o.ä. erzeugten Kräfte über das Eingriffselement 101 eine Kraft auf den Niederholhaken 20 ausüben, die in Richtung einer Verdrehung im Gegenuhrzeigersinn (Figur 12) wirkt. Wenn der Niederholhaken aus der Verriegelungsstellung gemäß Figur 12 bewegt werden soll, ist es erforderlich, den Schwenkzapfen 24 über den erhöhten Zwischenabschnitt 26b des Aufnahmeschlitzes 25 zu bewegen, was nur möglich ist, wenn dabei auch das Eingriffselement 101 etwa abgesenkt wird (Figur 11). Das bedeutet aber, daß die im normalen Betrieb auf den in der Verriegelungsstellung befindlichen Niederholhaken 20 wirkenden Kräfte seiner Verlagerung aus der Verriegelungsstellung entgegenwirken, d.h. der Niederholhaken 20 ist selbsthemmend in der Verriegelungsstellung gehalten und kann nur durch Aufbringen einer den wirkenden Kräften entgegengesetzten Kraft gelöst werden, die den Schwenkzapfen 24 über den Zwischenabschnitt 26b des Aufnahmeschlitzes 25 hinausbewegt. Diese lösende Kraft wird zur Freigabe des Fahrzeugverdecks 1 mit Hilfe der Betätigungsstange 10, 11 aufgebracht, die vom Arbeitszylinder 4 in der in Figur 4 angedeuteten Weise nach rechts bewegt wird, wodurch der Schwenkzapfen 24 aus der Stellung gemäß Figur 12 über die Stellung gemäß Figur 11 bewegt und so der Niederholhaken schließlich in die Stellung gemäß Figur 6 verlagert wird.

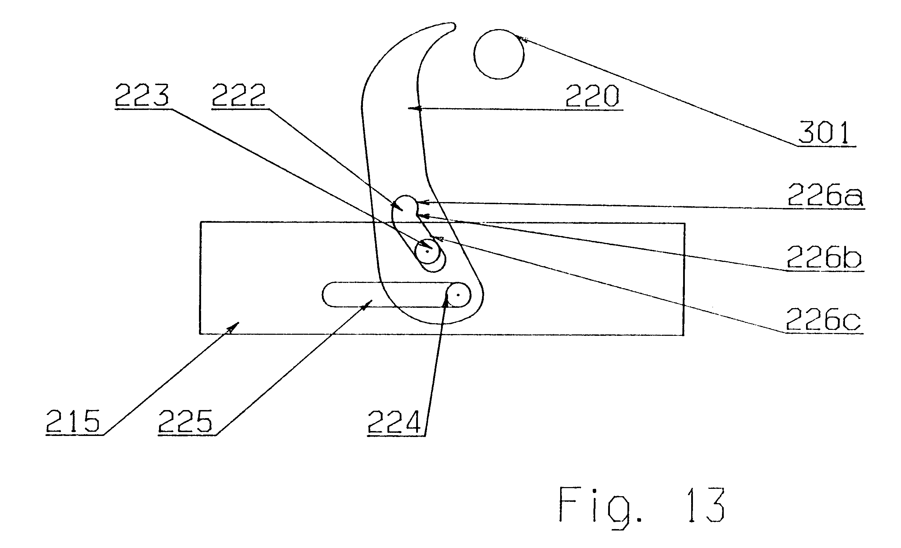

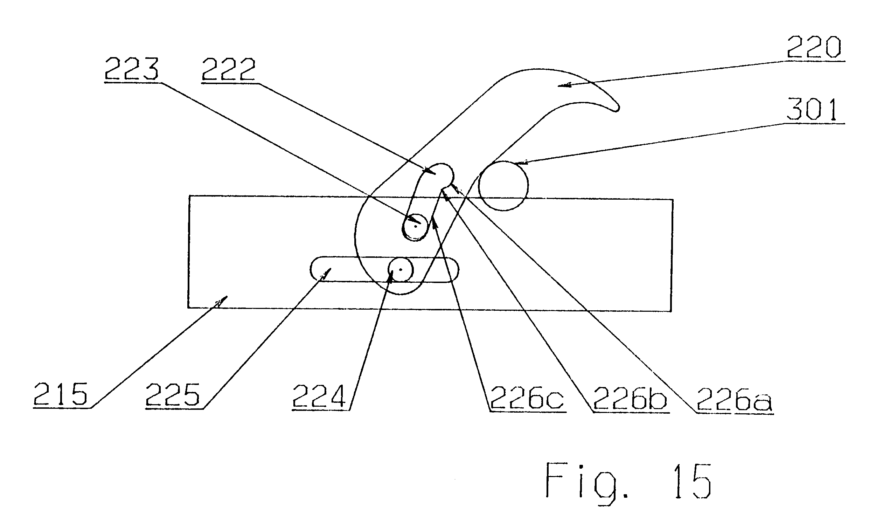

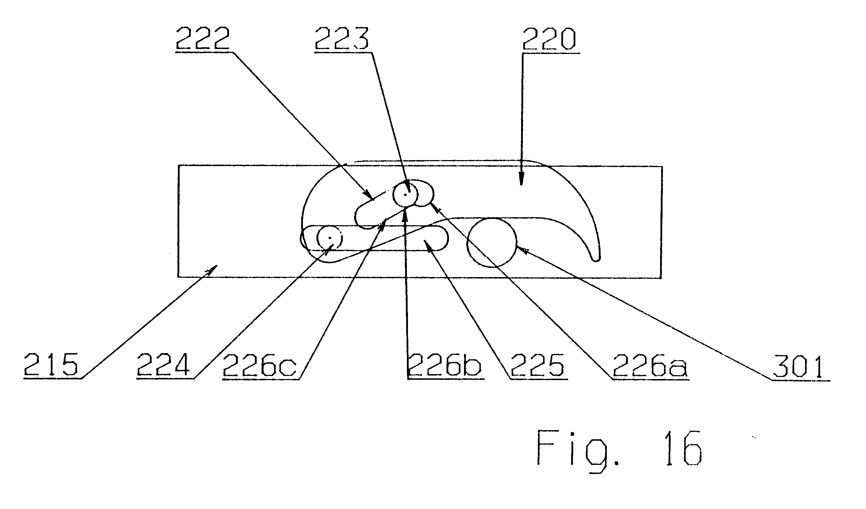

In dem Ausführungsbeispiel gemäß Figuren 13 bis 18 ist unter Beibehaltung des vorstehend beschriebenen Grundaufbaus eine Abwandlung in der Form von im Verschlußteil vorhandenem Aufnahmeschlitz und von im Niederholhaken vorhandenen Führschlitz vorgenommen. Im übrigen sind in den Figuren 13 bis 18 funktionell gleiche Teile wie in den Figuren 1 bis 12 mit jeweils um 200 erhöhten Bezugszeichen bezeichnet.

Wie zu erkennen ist, ist der im Abschnitt 215 des Verschlußteils vorgesehene Aufnahmeschlitz 225, der den Schwenkzapfen 224 aufnimmt, geradlinig ausgebildet, während der Führzapfen 222 im Niederholhaken 220 eine Kurve bildet. Der Führschlitz 222, dessen in Schlitzlängsrichtung verlaufenden Begrenzungswände im wesentlichen den gleichen Abstand voneinander haben, um den Führzapfen 223 gleitend zu führen, haben an der in Figur 13 nach außen gerichteten und somit dem Eingriffselement 301 des Fahrzeugverdecks zugewandten Seite einen im wesentlichen geradlinigen Abschnitt 226c, mit dem der Führzapfen 223 in der nach oben gerichteten Eingriffsstellung des Niederholhakens 220 in Eingriff steht. Am Ende dieses geradlinigen Abschnitts 226c befindet sich ein Zwischenabschnitt 226b, von dem aus die Seitenwand zu einem bezogen auf den Verlauf des Abschnittes 226c abfallenden Endabschnitt 226a übergeht.

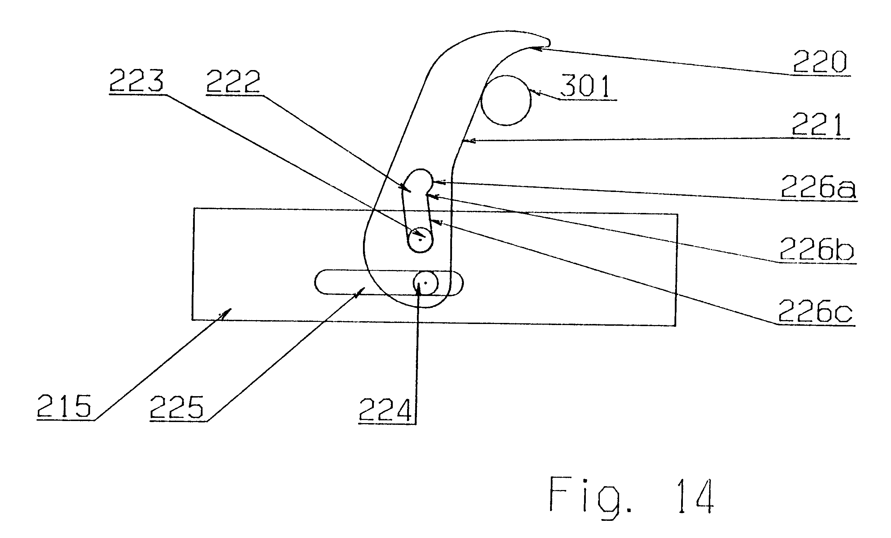

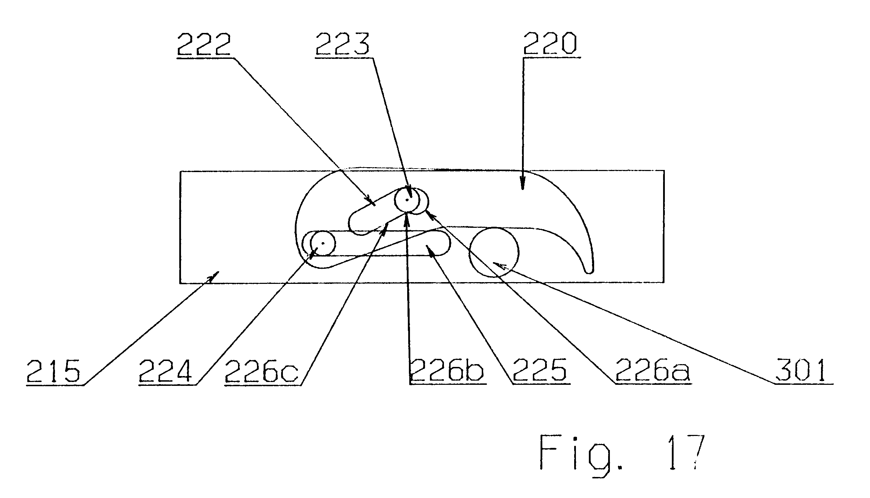

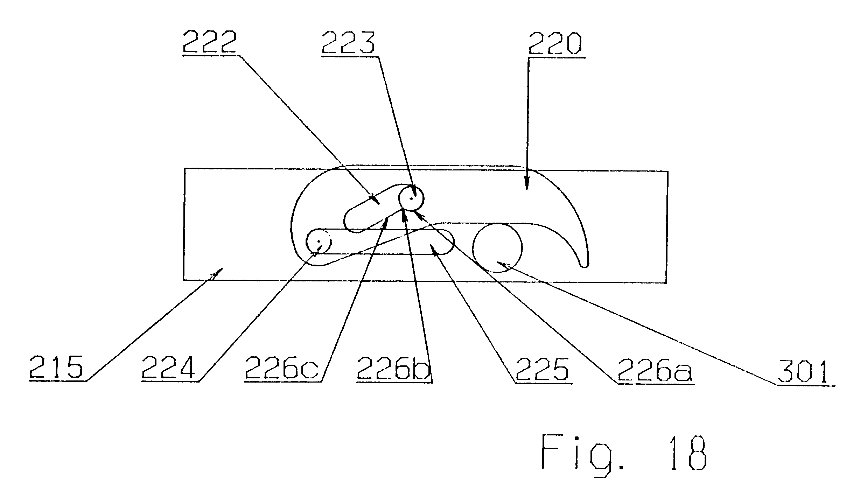

Wird der Schwenkzapfen 224 durch Verlagerung der in den Figuren 13 bis 18 nicht dargestellten Betätigungsstange im Aufnahmeschlitz 225 nach links bewegt, erfolgt eine Verschwenkbewegung des Niederholhakens 220, durch den dessen Angriffskurve 221 in Eingriff mit dem Eingriffselement 301 des Fahrzeugverdecks kommt und dieses allmählich absenkt (Figuren 14 bis 16). Dabei verlagert sich der Führzapfen 223 entlang dem Abschnitt 226c des Führschlitzes 222 immer mehr in Richtung auf den Zwischenabschnitt 226b. Wenn der Führzapfen 223 den Zwischenabschnitt 226b erreicht hat, ist der Niederholhaken 220 in die am weitesten abgesenkte Stellung verschwenkt, und daher befindet sich auch das Eingriffselement 301 in der bei dem Niederholvorgang auftretenden tiefsten Lage, die der Stellung gemäß Figur 11 im vorstehenden Ausführungsbeispiel entspricht. Bei weiterer Bewegung des Schwenkzapfens 224 im Aufnahmeschlitz 225 nach links bewegt sich der Führzapfen 223 über den Zwischenabschnitt 226b (Figur 17') in den Bereich des Endabschnittes 226a des Führschlitzes 222. Da der Endabschnitt 226a tiefer liegt als der Zwischenabschnitt 226b kann somit der Niederholhaken 220 wieder etwas im Gegenuhrzeigersinn zurückschwenken, und er gelangt in die Verriegelungsstellung gemäß Figur 18.

Entsprechend dem Ausührungsbeispiel gemäß Figuren 1 bis 12 wird der Niederholhaken 220 in der Verriegelungsstellung gemäß Figur 18 selbsthemmend gehalten, da der Führzapfen 223 zur Bewegung aus der Verriegelungsstellung über den erhöhten Zwischenabschnitt 226b des Führschlitzes 222 bewegt werden muß, wozu eine Kraft erforderlich ist, die denjenigen Kräften entgegenwirkt, die in der Verriegelungsstellung auf den Niederholhaken 220 wirken.

## Patentansprüche

1. Vorrichtung zum Niederholen des freien Endes eines Fahrzeugverdecks (1), einer Haube oder dergleichen auf den Rahmen (2) eines Fahrzeugs aus einer Stellung, in der sich das Fahrzeugverdeck (1) oder dergleichen kurz vor der geschlossenen Stellung und das freie Ende oberhalb dieser befindet, und zum Halten des vorderen Endes des Fahrzeugverdecks (1) oder dergleichen in der niedergeholten Stellung, mit mindestens einem am freien Ende des Fahrzeugverdecks (1) oder dergleichen vorgesehenen Eingriffselement (101, 101'; 301) für den Eingriff eines am Rahmen (2) vorgesehenen Niederholhakens (20, 20'; 220), der eine Angriffskurve (21; 221) zum gleitenden Eingriff mit dem Eingriffselement (101, 101'; 301) aufweist und der mit der Betätigungsstange (10, 11; 10', 11') einer Antriebseinrichtung (4) über einen in Eingriff mit einem länglichen Aufnahmeschlitz (25; 225) stehenden Schwenkzapfen (24; 224) schwenkbar gekoppelt und von der Antriebseinrichtung (4) zwischen einer angehobenen Eingriffsstellung und einer abgesenkten Verriegelungsstellung bewegbar ist, **dadurch gekennzeichnet,** daß der Aufnahmeschlitz (25; 225) für den Schwenkzapfen (25; 225) am Rahmen (12, 15; 215) ausgebildet ist, daß der Niederholhaken (20, 20'; 220) einen länglichen Führschlitz (22; 222) aufweist, mit dem ein am Rahmen (12, 15; 215) befestigter Führzapfen (23; 223) in Eingriff steht, um den der Niederholhaken (20; 220) bei Bewegung in die Verriegelungsstellung unter Verlagerung des Führzapfens (23; 223) entlang dem Führschlitz (25; 225) schwenkbar ist, und daß der Niederholhaken 20; 220) bei Bewegung in die Verriegelungsstellung vor deren Erreichen eine Zwischenstellung durchläuft, in der das Eingriffselement (201; 301) weiter abgesenkt ist, als in der Verriegelungsstellung, so daß der Niederholhaken (20; 220) in der Verriegelungsstellung selbsthemmend gehalten wird.

2. Vorrichtung nach Anspruch 1, **dadurch gekennzeichnet,** daß die den Schwenkzapfen (24) in der Verriegelungsstellung stützende Fläche (26a, 26b, 26c, 26d) des Aufnahmeschlitzes (25) vom den Schwenkzapfen (24) in der Verriegelungsstellung aufnehmenden Endbereich (26a) zur Erzeugung der Zwischenstellung ansteigt und in Fortsetzung davon bis unter die Höhe des Endbereichs (26a) abfällt.

3. Vorrichtung nach Anspruch 2, **dadurch gekennzeichnet,** daß an den abfallenden Abschnitt (26c) der Fläche des Aufnahmeschlitzes (25) ein im wesentlichen waagerechter Endabschnitt (26d) anschließt.

4. Vorrichtung nach Anspruch 2 oder 3, **dadurch gekennzeichnet,** daß der Aufnahmeschlitz (25) eine über seine gesamte Länge im wesentlichen konstante Breite hat.

5. Vorrichtung nach einem der Ansprüche 2 bis 4, **dadurch** **gekennzeichnet**, daß der Führschlitz (22) geradlinig ist.

6. Vorrichtung nach Anspruch 1, **dadurch gekennzeichnet,** daß die den Führzapfen (223) bei Bewegung in die Verriegelungsstellung stützende Fläche (226a, 226b, 226c) des Führschlitzes (222) vom den Führzapfen (223) in der Verriegelungsstellung aufnehmenden Endbereich (226a) zur Erzeugung der Zwischenstellung ansteigt und in Fortsetzung davon bis unter die Höhe des Endbereichs (226a) abfällt.

7. Vorrichtung nach Anspruch 6, **dadurch gekennzeichnet,** daß der abfallende Abschnitt (226c) der Fläche des Führschlitzes (222) geradlinig bis zum anderen Endbereich des Führschlitzes (222) verläuft.

8. Vorrichtung nach Anspruch 6 oder 7, **dadurch gekennzeichnet,** daß der Führschlitz (222) eine über seine gesamte Länge im wesentlichen konstante Breite hat.

9. Vorrichtung nach einem der Ansprüche 6 bis 8, **dadurch** **gekennzeichnet**, daß der Aufnahmeschlitz (225) geradlinig ist.

10. Vorrichtung nach Anspruch 9, **dadurch gekennzeichnet,** daß der Aufnahmeschlitz (225) waagerecht verläuft.

## Claims

1. Device for the retraction of the free end of a vehicle folding top (1), a bonnet or the like, onto the frame (2) of a vehicle, from a position in which the vehicle folding top (1) or the like is located just in front of the closed position and the free end above the latter, and for holding the front end of the vehicle folding top (1) or the like in the retracted position, having at least one engagement element (101, 101'; 301), provided on the free end of the vehicle folding top (1) or the like, for the engagement of a retraction hook (20, 20'; 220), which is provided on the frame (2), has a contact curve (21; 221) for sliding engagement with the engagement element (101, 101'; 301), can be pivotably coupled, via a pivoting journal (24; 224) in engagement with an elongate receiving slot (25; 225), to the operating rod (10, 11; 10', 11') of a driving device (4) and can be moved between a raised engagement position and a lowered locking position by the driving device (4), characterized in that the receiving slot (25; 225) for the pivoting journal (24; 224) is formed on the frame (12, 15; 215), in that the retraction hook (20, 20'; 220) has an elongate guide slot (22; 222), in engagement with which is a guide journal (23; 223), which is fastened to the frame (12, 15; 215) and about which the retraction hook (20; 220), when moving into the locking position, can be pivoted, the guide journal (23; 223) being displaced along the guide slot (25; 225), and in that the retraction hook (20; 220), when moving into the locking position, passes, before reaching the latter, through an intermediate position in which the engagement element (201; 301) is lowered further than in the locking position, and, as a result, the retraction hook (20; 220) is held in a self-locking manner in the locking position.

2. Device according to Claim 1, characterized in that that surface (26a, 26b, 26c, 26d) of the receiving slot (25) which supports the pivoting journal (24) in the locking position slopes up from the end region (26a), which receives the pivoting journal (24) in the locking position, to produce the intermediate position, and, continuing therefrom, slopes down until it is below the level of the end region (26a).

3. Device according to Claim 2, characterized in that an essentially horizontal end section (26d) adjoins the downward-sloping section (26c) of the surface of the receiving slot (25).

4. Device according to Claim 2 or 3, characterized in that the receiving slot (25) has an essentially constant width over its entire length.

5. Device according to one of Claims 2 to 4, characterized in that the guide slot (22) is rectilinear.

6. Device according to Claim 1, characterized in that that surface (226a, 226b, 226c) of the guide slot (222) which supports the guide journal (223) during movement into the locking position slopes up from the end region (226a), which receives the guide journal (223) in the locking position, to produce the intermediate position, and, continuing therefrom, slopes down until it is below the level of the end region (226a).

7. Device according to Claim 6, characterized in that the downward-sloping section (226c) of the surface of the guide slot (222) runs rectilinearly up to the other end region of the guide slot (222).

8. Device according to Claim 6 or 7, characterized in that the guide slot (222) has an essentially constant width over its entire length.

9. Device according to one of Claims 6 to 8, characterized in that the receiving slot (225) is rectilinear.

10. Device according to Claim 9, characterized in that the receiving slot (225) runs horizontally.

## Revendications

1. Dispositif pour abaisser l'extrémité libre d'une capote de véhicule (1), d'un capot ou analogue sur la carrosserie (2) d'un véhicule à partir d'une position à laquelle la capote (1) ou analogue se trouve peu avant la position fermée et l'extrémité libre se trouve au-dessus de celle-ci, ainsi que pour maintenir l'extrémité avant de la capote (1) ou analogue à la position abaissée, dispositif qui comprend au moins un élément d'attache (101, 101'; 301) prévu à l'extrémité libre de la capote (1) ou analogue et dans lequel est destiné à s'engager un crochet d'abaissement (20, 20'; 220) prévu sur la carrosserie (2), crochet qui présente une surface d'attaque courbe (21; 221) pour s'engager par un mouvement glissant dans l'élément d'attache (101, 101': 301), est accouplé de façon articulée à la tringle de manoeuvre (10, 11; 10', 11') d'un dispositif de commande (4) par l'intermédiaire d'un axe de pivotement (24; 224) emprisonné dans une fente réceptrice oblongue (25; 225) et est déplaçable par le dispositif de commande (4) entre une position relevée d'engagement et une position basse de verrouillage, caractérisé en ce que la fente réceptrice (25; 225) pour l'axe de pivotement (24; 224) est formée sur la carrosserie (12, 15; 215), que le crochet d'abaissement (20, 20'; 220) présente une lumière de guidage oblongue (22; 222) dans laquelle est emprisonné un axe de guidage (23; 223) fixé à la carrosserie (12, 15; 215) et autour duquel le crochet d'abaissement (20; 220) peut pivoter lors du mouvement à la position de verrouillage, ce qui s'accompagne d'un déplacement de l'axe de guidage (23; 223) le long de la lumière de guidage (25; 225), et que le crochet d'abaissement (20; 220), lors de son mouvement à la position de verrouillage et avant d'atteindre celle-ci, passe par une position intermédiaire à laquelle l'élément d'attache (201; 301) est abaissé davantage qu'à la position de verrouillage, de sorte que le crochet d'abaissement (20; 220) est maintenu par blocage automatique à la position de verrouillage.

2. Dispositif selon la revendication 1, caractérisé en ce que la surface (26a, 26b, 26c, 26d) de la fente réceptrice (25) supportant l'axe de pivotement (24) à la position de verrouillage, monte à partir de la portion terminale (26a) recevant l'axe de pivotement (24) à la position de verrouillage, en vue de la création de la position intermédiaire, et descend ensuite, dans le prolongement de cette position intermédiaire, jusqu'au-dessous de la hauteur de la portion terminale (26a).

3. Dispositif selon la revendication 2, caractérisé en ce qu'un segment terminal (26b) essentiellement horizontal se raccorde au segment descendant (26c) de la surface de la fente réceptrice (25).

4. Dispositif selon la revendication 2 ou 3, caractérisé en ce que la fente réceptrice (25) possède sur toute sa longueur une largeur essentiellement constante.

5. Dispositif selon une des revendications 2 à 4, caractérisé en ce que la lumière de guidage (22) est rectiligne.

6. Dispositif selon la revendication 1, caractérisé en ce que la surface (226a, 226b, 226c) de la lumière de guidage (222) supportant l'axe de guidage (223) lors de son mouvement à la position de verrouillage, monte à partir de la portion terminale (226a) recevant l'axe de guidage (223) à la position de verrouillage, en vue de la création de la position intermédiaire, et descend ensuite, dans le prolongement de cette position intermédiaire, jusqu'au-dessous de la hauteur de la portion terminale (226a).

7. Dispositif selon la revendication 6, caractérisé en ce que le segment descendant (226c) de la surface de la lumière de guidage (222) s'étend en ligne droite jusqu'à l'autre portion terminale de la lumière de guidage (222).

8. Dispositif selon la revendication 6 ou 7, caractérisé en ce que la lumière de guidage (222) possède sur toute sa longueur une largeur sensiblement constante.

9. Dispositif selon une des revendications 6 à 8, caractérisé en ce que la fente réceptrice (225) est rectiligne.

10. Dispositif selon la revendication 9, caractérisé en ce que la fente réceptrice (225) s'étend horizontalement.
